# EUROPEAN PATENT APPLICATION

(11) **EP 4 617 313 A1**
(43) Date of publication of application: **17.09.2025**
(21) Application number: 25163532.2
(22) Date of filing: 13.03.2025
(51) Int. Cl.: C08L 23/22, B60C 1/00

(54) **ELASTOMER COMPOSITIONS AND ARTICLES THEREOF**

(30) Priority: 15.03.2024 US 202418606969
(71) Applicant: The Goodyear Tire & Rubber Company, Akron, OH 44316 (US)
(72) Inventor: FRANTZEN, Andreas, D-54292 Trier (DE); BRAUN, Lothar Claus, D-54669 Bollendorf (DE); SILL, Clemens Manuel, D-54294 Trier (DE); MARNACH, Serge, L-9990 Weiswampach (LU); KAYSER, François, L-8063 Luxembourg (LU); FISCHER, Anne-Catherine, F-57570 Beyren-lès-Sierck (FR)
(74) Representative: Kutsch, Bernd

(57) **Abstract**

An uncured composition is disclosed comprising: an elastomer, a curing agent, a co-curative, and a diluent, wherein the diluent comprises or consists of a first polyisobutene that comprises at least 60 mol% of terminal vinylidene groups. Also, a vulcanized composition is disclosed comprising said uncured composition that has been vulcanized. The vulcanized composition may be used in a tire or tire component.

## Description

### BACKGROUND

The demand for improved tire performance has resulted in the development and evaluation of new materials that, when incorporated into rubber compositions, demonstrate desired properties such as good stiffness and elasticity. For elastomer compositions used in the construction of tires, such as sealants, developing compositions with improved and tunable viscoelastic properties without compromising processability can be challenging. Sealant layers applied directly to a tire after the cure process are referred to as post-cure sealants. Such sealants are in some cases adhesively secured to the exposed surface of the tire, such as the innermost inner liner. These post-cure sealants may not provide adequate long-term seal against puncturing objects. Therefore, there is a need for improved post-cure sealants for tires, in addition to a general need for improved elastomer compositions used in the construction of tires.

### SUMMARY OF THE INVENTION

The invention relates to an uncured composition in accordance with claim 1, to a vulcanized composition in accordance with claim 13, and to an article in accordance with claim 15.

Dependent claims refer to preferred embodiments of the invention.

In accordance with a preferred aspect of the invention, an uncured composition is provided that includes an elastomer, a curing agent, a co-curative, and a diluent, where the diluent comprises a first polyisobutene with at least 60 mol% of terminal vinylidene groups, which is hereinafter also referred to as "highly reactive" polyisobutene.

The diluent can include a second diluent comprising a second polyisobutene comprising at most 20 mol% terminal vinylidene groups, a hydrocarbon oil, or a combination thereof.

Also disclosed are vulcanized rubber compositions including the uncured compositions that have been vulcanized and articles, including tires and/or components of tires, comprising the vulcanized rubber compositions.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims. In addition, all optional and preferred features and modifications of the described embodiments are usable in all aspects of the disclosure taught herein. Furthermore, the individual features of the dependent claims, as well as all optional and preferred features and modifications of the described embodiments are combinable and interchangeable with one another.

### BRIEF DESCRIPTION OF THE DRAWINGS

Many aspects of the present disclosure can be better understood with reference to the following drawings. The components in the drawings are not necessarily to scale, emphasis instead being placed upon clearly illustrating the principles of the present disclosure. Moreover, in the drawings, like reference numerals designate corresponding parts throughout the several views.
FIG. 1 shows a cured composition prepared from a diluent mixture of 30% first, highly reactive polyisobutene (HR-PIB) and 70% conventional polyisobutene (C-PIB) results in 26% increase or 1.25 times higher elastic modulus G' based on ASTM D5289 when compared to a cured composition that does not include HR-PIB.
FIG. 2 shows a cured composition prepared from a diluent composed of 100% first, highly reactive polyisobutene (HR-PIB) results in 140% increase or 2.4 times higher elastic modulus G' based on ASTM D5289 when compared to a cured composition that does not include HR-PIB.
FIG. 3 shows a cured composition prepared from a diluent mixture of 30% first, highly reactive polyisobutene (HR-PIB) and 70% conventional polyisobutene (C-PIB) results in 33% increase or 1.55 times higher elastic modulus G' based on ASTM D4440 when compared to a cured composition that does not include HR-PIB.
FIG. 4 shows a cured composition prepared from a diluent composed of 100% first, highly reactive polyisobutene (HR-PIB) results in 350% increase or 4.5 times higher elastic modulus G' based on ASTM D5289 when compared to a cured composition that does not include HR-PIB.
FIG. 5 shows a cured composition prepared from a diluent mixture of 30% first highly reactive polyisobutene (HR-PIB) and 70% conventional polyisobutene (C-PIB) results in 30% reduction of loss factor tan delta based on ASTM D4440 when compared to a cured composition that does not include HR-PIB.
FIG. 6 shows a cured composition prepared from a diluent composed of 100% first, highly reactive polyisobutene (HR-PIB) results in 97.5% reduction of loss factor tan delta based on ASTM D4440 when compared to a cured composition that does not include HR-PIB.

Additional advantages of the invention will be set forth in part in the description which follows, and in part will be obvious from the description, or can be learned by practice of the invention. The advantages of the invention will be realized and attained by means of the elements and combinations particularly pointed out in the appended claims. It is to be understood that both the foregoing general description and the following detailed description are exemplary and explanatory only and are not restrictive of the invention, as claimed.

### DETAILED DESCRIPTION OF PREFERRRED EMBODIMENTS OF THE INVENTION

Any recited method can be carried out in the order of events recited or in any other order that is logically possible. That is, unless otherwise expressly stated, it is in no way intended that any method or aspect set forth herein be construed as requiring that its steps be performed in a specific order. Accordingly, where a method claim does not specifically state in the claims or descriptions that the steps are to be limited to a specific order, it is no way intended that an order be inferred, in any respect. This holds for any possible non-express basis for interpretation, including matters of logic with respect to arrangement of steps or operational flow, plain meaning derived from grammatical organization or punctuation, or the number or type of aspects described in the specification.

Prior to describing the embodiments of the invention, the following definitions are provided and should be used unless otherwise indicated. Additional terms may be defined elsewhere in the present disclosure.

### Definitions

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

As used in the specification and the appended claims, the singular forms "a," "an," and "the" include plural referents unless the context clearly dictates otherwise. Thus, for example, reference to "an elastomer," "a pre-silanized silica," or "a vulcanizing agent," include, but are not limited to, mixtures or combinations of two or more such elastomers, pre-silanized silicas, or vulcanizing agents, and the like.

As used herein, the terms "optional" or "optionally" means that the subsequently described event or circumstance can or cannot occur, and that the description includes instances where said event or circumstance occurs and instances where it does not.

As used herein, the term "phr" refers to parts by weight of a respective material per 100 parts by weight of rubber or elastomer. In general, using this convention, an elastomer composition is comprised of 100 parts by weight of rubber/elastomer. The claimed composition may comprise other rubbers/elastomers than explicitly mentioned in the claims, provided that the phr value of the claimed rubbers elastomers is in accordance with claimed phr ranges and the amount of all rubbers/elastomers in the composition results in total in 100 parts of rubber.

The terms "rubber" and "elastomer" may be used herein interchangeably, unless indicated otherwise.

As used herein, the term "uncured composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In one aspect, the uncured rubber composition is a masterbatch.

As used herein, the term "vulcanized rubber composition" refers to a rubber composition obtained by taking an uncured composition as described herein and curing or vulcanizing it, often accomplished using sulfur compounds and/or other curing additives and in the presence of heat. Vulcanized or cured rubber does not undergo cold flow and is less sensitive to changes in temperature relative to uncured rubber. In another aspect, rubber compositions can be cured in molds in order to form finished articles including tires.

As used herein, the term "repeat unit" as referenced in the partially saturated elastomers described herein are derived from monomers used to produce the partially saturated elastomers. For example, polybutadiene has the repeat unit as provided below.

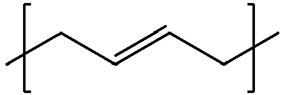

In certain aspects, when the partially saturated elastomer is the polymerization product of two different monomers (e.g., A and B), the repeat unit can be represented by -A-B-.

Unless otherwise specified, pressures referred to herein are based on atmospheric pressure (i.e. one atmosphere).

### Rubber Compositions

Disclosed herein are uncured compositions, that can preferably be used as sealant compositions including post-cure sealant compositions, comprising an elastomer, a curing agent, a co-curative, and a diluent, where the diluent includes a first polyisobutene (HR-PIB), which is hereinafter also referred to as "highly reactive" polyisobutene. In these uncured compositions, that can preferably be used as sealant compositions, HR-PIB has been found, unexpectedly, to interact with the curing agent and actively contribute to crosslink formation, increasing stiffness and elasticity in the cured composition with increasing HR-PIB content. This allows for the resulting composition's crosslink density and other properties to be tuned by varying the relative amount of HR-PIB. In certain aspects, blending other materials with HR-PIB to form the diluent, such as oils or conventional PIB (C-PIB), can allow for improvement and cost-effective tuning of the resulting composition's properties.

The diluent in the uncured composition includes a first polyisobutene (HR-PIB), which is characterized by including at least 60 mol% of terminal vinylidene groups.

Terminal functional groups, such as terminal vinylidene groups, are functional groups located at the end of a carbon chain (i.e., the terminal position). The HR-PIB can preferably include at least 75 mol% of terminal vinylidene groups. In another preferred aspect, the HR-PIB can include at least 60 mol%, 65 mol%, 70 mol%, 75 mol%, 80 mol%, 85 mol%, 90 mol%, or 95 mol% of terminal vinylidene groups, where any value can be a lower and upper endpoint of a range (e.g., 70 mol% to 85 mol%).

In a preferred aspect, the HR-PIB has a number average molecular weight ranging from 500 Da to 5000 Da or 500 Da, 1000 Da, 2000 Da, 3000 Da, 4000 Da, or 5000 Da, where any value can be a lower and upper endpoint of a range (e.g., 500 Da to 1000 Da).

The diluent can further include a second diluent. In one aspect, the second diluent includes a second polyisobutene, characterized by including at most 20 mol% terminal vinylidene groups. In further aspects, the second polyisobutene preferably includes at most 10 mol% of terminal vinylidene groups. In another aspect, the second polyisobutene can include at most 5 mol%, 10 mol%, 15 mol%, or 20 mol% of terminal vinylidene groups, where any value can be a lower and upper endpoint of a range (e.g., 5 mol% to 20 mol%). In one aspect, the second polyisobutene has a number average molecular weight ranging from 500 Da to 5000 Da or 500 Da, 1000 Da, 2000 Da, 3000 Da, 4000 Da, or 5000 Da, where any value can be a lower and upper endpoint of a range (e.g., 500 Da to 1000 Da).

In other preferred aspects, the second diluent can include a hydrocarbon oil. Examples of the hydrocarbon oil include a mineral oil, a vegetable oil, or a combination thereof. Mineral oils can include aromatic oils, naphthenic oils, paraffinic oils, MES oils, TDAE oils, RAE oils, and SRAE oils. Vegetable oils can include sunflower oil, soybean oil, corn oil, castor oil, and canola oil. In other aspects, the second diluent can include a combination of the second polyisobutene and a hydrocarbon oil.

Preferably, the weight ratio of the HR-PIB to the second diluent (HR-PIB:second diluent) is 1:20 to 20:1 or 1:20, 1:15, 1:10, 1:5, 1:4, 1:2, 1:1, 2:1, 4:0, 5:1, 10:1, 15:1, or 20:1, where any value can be a lower and upper endpoint of a range (e.g., 1:20 to 1:5).

Preferably, the diluent (including HR-PIB and the second diluent) is present in the uncured composition in amounts of 10 wt% to 80 wt% or 10 wt%, 20 wt%, 30 wt%, 40 wt%, 50 wt%, 60 wt%, 70 wt%, or 80 wt%, where any value can be a lower and upper endpoint of a range (e.g., 50 wt% to 80 wt%).

Preferably, the diluent (including HR-PIB and the second diluent) is present in the uncured composition in amounts of 100 phr to 600 phr or 100 phr, 150 phr, 200 phr, 250 phr, 300 phr, 350 phr, 400 phr, 450 phr, 500 phr, 550 phr, or 600 phr, where any value can be a lower and upper endpoint of a range (e.g., 200 phr to 500 phr). In other aspect, the diluent consists of HR-PIB (i.e., the diluent is 100% HR-PIB).

Preferably, the elastomer is present in the uncured composition in amounts of 10 wt% to 50 wt% or 10 wt%, 20 wt%, 30 wt%, 40 wt%, or 50 wt%, where any value can be a lower and upper endpoint of a range (e.g., 20 wt% to 40 wt%). In one aspect, the elastomer comprises repeat units formed by residues of monomers selected from one or more of ethylene, propylene, isobutene, butadiene, isoprene, styrene, acrylonitrile, and any combination thereof.

Preferably, the elastomer is selected from isoprene-isobutylene-rubber (Butyl rubber, IIR), halogenated isoprene-isobutylene-rubber (HIIR), ethylene-propylene-diene-terpolymer (EPDM), styrene-butadiene copolymer (SBR), acrylonitrile-butadiene copolymer (AB), acrylonitrile-butadiene-styrene copolymer (ABS), polybutadiene, natural rubber, cis polyisoprene, and any combination thereof. In further aspects, the elastomers generally having a number average molecular weight (Mₙ) between 100000 Da and 500000 Da.

In the specification, the number average molecular weight Mₙ is determined by gel permeation chromatography using polystyrene calibration standards following ASTM D3536-76e1 or equivalent.

Preferably, the elastomer is a butyl rubber comprising repeat units of isobutene and a conjugated diene. In one aspect, 85 wt% to 99.5 wt% of the butyl rubber is repeat units of isobutene, or 85 wt%, 90 wt%, 95 wt%, or 99 wt%, where any value can be a lower and upper endpoint of a range (e.g., 90 wt% to 99 wt%). In one aspect, 0.1 wt% to 15.0 wt% of the butyl rubber is repeat units of a conjugated diene, or 0.1 wt%, 3 wt%, 6 wt%, 9 wt%, 12 wt%, or 15 wt%, where any value can be a lower and upper endpoint of a range (e.g., 3 wt% to 6 wt%). In further aspects, the conjugated diene has from 4 to 8 carbon atoms, such as butadiene, isoprene, and hexadiene. In other aspects, the conjugated diene is isoprene.

Preferably, the curing agent is present in the uncured composition in amounts of 0.5 wt% to 5.0 wt% or 0.5 wt%, 1.0 wt%, 2.0 wt%, 3.0 wt%, 4.0 wt%, or 5.0 wt%, where any value can be a lower and upper endpoint of a range (e.g., 2.0 wt% to 4.0 wt%). In one aspect, the curing agent present in the uncured composition is a quinoid curing agent. In further aspects, the curing agent can be selected from benzoquinone dioxime (BQD), dibenzoyl-p-quinone dioxime, p,p-di-benzoylquinone dioxime, p-dinitrosobenzene, N-methyl-N,4-dinitrosoanilene, or any combination thereof. In other aspects, the curing agent is BQD.

Preferably, the co-curative is present in the uncured composition in amounts of 1 wt% to 15 wt% or 1 wt%, 3 wt%, 6 wt%, 9 wt%, 12 wt%, or 15 wt%, where any value can be a lower and upper endpoint of a range (e.g., 9 wt% to 12 wt%). In one aspect, the co-curative is an oxidant. In further aspects, the co-curative is an organic peroxide. In one aspect, the organic peroxide can be selected from diaroyl peroxides, diacyl peroxides, and peroxyesters. In a further aspect, the co-curative is dibenzoyl peroxide. In other aspects, the co-curative is selected from ZnO, MgO, CaO, or any combination thereof. In one aspect, the uncured composition includes a dibenzoyl peroxide co-curative and a BQD curing agent.

Resins can also be present in the uncured compositions. Suitable resins include, but are not limited to, hydrocarbon resins, phenol/acetylene resins, rosin derived resins, and mixtures thereof. Hydrocarbon resins can include coumarone-indene-resins, petroleum resins, terpene polymers, and mixtures thereof.

### Preparation and Applications of Rubber Compositions

The compositions disclosed herein can be compounded by methods generally known in the rubber compounding art. In one aspect, these methods including mixing the aforementioned components of the uncured composition with other conventional compounding ingredients, including filler, such as carbon black and silica; antidegradants, such as antioxidants and antiozonants; colorants; processing aids; cure accelerators; and cure retarders. In one aspect, cure accelerators can be selected from dithiocarbamate accelerators, thiuram accelerators, diphenylguanidine accelerators, benzothiazole sulfenamide accelerators, or any combination thereof. The cure accelerators can include derivatives: e.g., a benzothiazole sulfenamide accelerator includes benzothiazole sulfenamide and can also include derivatives of benzothiazole sulfenamide. In other aspects, the cure accelerators can include amines, disulfides, guanidines, thioureas, thiazoles, thiurams, sulfenamides, dithiocarbamates, and xanthates. In one aspect, cure retarders can be selected from ethylene glycol, alkyl-substituted ethylene glycols, ethylene diamine, and alkyl-substituted ethylene diamines. In further aspects, cure retarders can be selected from ethylene glycol, propylene glycol (i.e., α-propylene glycol), ethylene diamine, methyl ethylene diamine, N,N-dimethyl ethylene diamine, and 1,2-dimethyl ethylene diamine. In one aspect, antioxidants and antioxidants can each individually be included in amounts of 1 phr to 5 phr. In one aspect, antioxidants can be selected from diphenyl-p-phenylenediamine and others, such as those disclosed in The Vanderbilt Rubber Handbook (1978), Pages 344 through 346. In other aspects, antiozonants can be selected from N-phenyl-N'-(1,3-dimethylbutyl)-p-phenylenediamine (6PPD) and N,N'-dixylene-p-phenylenediamine (DTPD). In other aspects, basic oxides, such as zinc oxide, magnesium oxide, and calcium oxide, can be included in amounts of 1 phr to 5 phr. Mixing of the uncured composition can be accomplished for example by combining the elastomers and other components in a rubber mixer such as a Brabender internal mixer, extruder, conical mixer, or the like. A suitable process for mixing the uncured composition, using it as a sealant composition and applying to a tire innerliner is as disclosed for example in US 8,821,982.

Also disclosed herein are rubber compositions comprising any of the uncured compositions disclosed herein that have been vulcanized and articles that include the vulcanized compositions. In one aspect, the article comprises a tire, such as a pneumatic tire, or a component of a tire. The tire can be a race tire, passenger tire, aircraft tire, agricultural, earthmover, off-the-road or truck tire. In one embodiment, the tire is a passenger or truck tire. The tire can also be a radial or bias. Such tires can be built, shaped, molded and cured by various methods which are known and will be readily apparent to those having skill in such art. The component of the tire can be a tread, base, sidewall, apex, chafer, sidewall insert, wirecoat, innerliner, or any combination thereof. In further aspects, the composition can be applied to a cured tire. In further aspects, the composition can be applied to the innerliner of a cured tire. Prior to application of the composition for use as a sealant composition, the tire can be cleaned of surface impurities to improve adhesion of the composition to the tire surface. In one embodiment, the tire innerliner surface is cleaned using a laser technique as described in US 2017/0151740 A1.

The use of the first polyisobutene (HR-PIB) in the presence or absence of a second diluent can modify the physical properties of the cured rubber compositions described herein. In one aspect, the elastic modulus of the cured rubber composition is modified. In one aspect, the cured rubber composition has an elastic modulus G' at a strain of 6.1%, 70°C, and a frequency of 1.672 Hz based on ASTM D5289 that is at least 20% greater, 30% greater, 40% greater, 50% greater, 75% greater, or up to 100% greater than the elastic modulus G' of a cured composition that does not comprise the first and highly reactive polyisobutene. In another aspect, the cured rubber composition has an elastic modulus G' at a strain of 0.5%, 60°C, and a frequency of 0.005 Hz based on ASTM D4440 that is at least 30% lower, 40% lower, 50% lower, 75% lower, or up to 100% lower than the loss factor tan delta of a cured composition that does not comprise the first and highly reactive polyisobutene.

In another aspect, the cured rubber composition has a loss factor tan delta at a strain of 0.5%, 60°C, and a frequency of 0.005 Hz based on ASTM D4440 that is at least 30% lower, 40% lower, 50% lower, 75% lower, or up to 100% lower than the loss factor tan delta of a cured composition that does not comprise the first and highly reactive polyisobutene.

Now having described the aspects of the present disclosure, in general, the following Aspects and Examples describe some additional aspects of the present disclosure. While aspects of the present disclosure are described in connection with the following examples and the corresponding text and figures, there is no intent to limit aspects of the present disclosure to this description.

### ASPECTS

The present disclosure can be described in accordance with the following numbered Aspects, which should not be confused with the claims.

Aspect 1. An uncured composition comprising: an elastomer, a curing agent, a co-curative, and a diluent, wherein the diluent comprises a first polyisobutene that comprises at least 60 mol% of terminal vinylidene groups. This first polyisobutene is hereinafter referred to as a "highly reactive" polyisobutene.

Aspect 2. The composition of Aspect 1, wherein the diluent consists of the first polyisobutene.

Aspect 3. The composition of Aspect 1, wherein the diluent comprises a second diluent comprising a second polyisobutene comprising at most 20 mol% terminal vinylidene groups, a hydrocarbon oil, or a combination thereof.

Aspect 4. The composition of Aspect 3, wherein the weight ratio of the first polyisobutene to the second diluent is 1:20 to 20:1.

Aspect 5. The composition of Aspect 3, wherein the weight ratio of the first polyisobutene to the second diluent is 1:20 to 1:2.

Aspect 6. The composition of any one of Aspects 3-5, wherein the second diluent comprises a second polyisobutene comprising at most 10 mol% of terminal vinylidene groups.

Aspect 7. The composition of any one of Aspects 3-5, wherein the second diluent comprises a second polyisobutene comprising from 5 mol% to at most 20 mol% of terminal vinylidene groups.

Aspect 8. The composition of any one of Aspects 3-7, wherein the second polyisobutene has a number average molecular weight of 500 Dalton to 5000 Dalton.

Aspect 9. The composition of any one of Aspects 3-5, wherein the second diluent comprises a hydrocarbon oil.

Aspect 10. The composition of any one of Aspects 3-5, wherein the hydrocarbon oil comprises a mineral oil, a vegetable oil, or a combination thereof.

Aspect 11. The composition of any one of Aspects 1-10, wherein the highly reactive polyisobutene comprises at least 75 mol% of terminal vinylidene groups.

Aspect 12. The composition of any one of Aspects 1-10, wherein the first polyisobutene comprises from 60 mol% to less than 95 mol% terminal vinylidene groups.

Aspect 13. The composition of any one of Aspects 1-12, wherein the first polyisobutene has a number average molecular weight of 500 Dalton to 5000 Dalton.

Aspect 14. The composition of any one of Aspects 1-13, wherein the elastomer comprises repeat units formed by residues of monomers selected from one or more of ethylene, propylene, isobutene, butadiene, isoprene, styrene, acrylonitrile, and any combination thereof.

Aspect 15. The composition of any one of Aspects 1-14, wherein the curing agent is a quinoid.

Aspect 16. The composition of any one of Aspects 1-14, wherein the curing agent is selected from the group consisting of benzoquinone dioxime, p,p-dibenzoylquinone dioxime, dibenzoyl-p-quinone dioxime, p-dinitrosobenzene, N-methyl-N, 4-dinitrosoanilene, and any combination thereof.

Aspect 17. The composition of any one of Aspects 1-16, wherein the co-curative is an oxidant.

Aspect 18. The composition of any one of Aspects 1-16, wherein the co-curative is an organic peroxide.

Aspect 19. The composition of any one of Aspects 1-16, wherein the co-curative is a diaroyl peroxide, a diacyl peroxide, or a peroxyester.

Aspect 20. The composition of any one of Aspects 1-16, wherein the curing agent is benzoquinone dioxime and the co-curative is dibenzoyl peroxide.

Aspect 21. The composition of any one of Aspects 1-20, wherein the diluent is from 50 weight percent to 80 weight percent of the composition.

Aspect 22. A vulcanized rubber composition comprising the uncured composition of any one of Aspects 1-21 that has been vulcanized.

Aspect 23. The composition in Aspect 22, wherein the composition after cure has an elastic modulus G' at a strain of 6.1%, 70°C, and a frequency of 1.672 Hz based on ASTM D5289 that is at least 20% greater than the elastic modulus G' of a cured composition that does not comprise the first polyisobutene.

Aspect 24. The composition in Aspect 22, wherein the composition after cure has an elastic modulus G' at a strain of 0.5%, 60°C, and a frequency of 0.005 Hz based on ASTM D4440 that is at least 30% lower than the loss factor tan delta of a cured composition that does not comprise the first polyisobutene.

Aspect 25. The composition in Aspect 22, wherein the composition after cure has a loss factor tan delta at a strain of 0.5%, 60°C, and a frequency of 0.005 Hz based on ASTM D4440 that is at least 30% lower than the loss factor tan delta of a cured composition that does not comprise the first polyisobutene.

Aspect 26. An article comprising the vulcanized rubber composition of any one of Aspects 22-25.

Aspect 27. The article of Aspect 26, wherein the article comprises a tire or a component of a tire.

Aspect 28. The article of Aspect 27, wherein the component of the tire comprises a tread, sidewall, apex, chafer, sidewall insert, wire coat, innerliner, or any combination thereof.

### EXAMPLES

Unless indicated otherwise, parts are parts by weight, temperature is in °C or is at ambient temperature, and pressure is at or near atmospheric.

### Example 1: Evaluation of Rubber Compositions

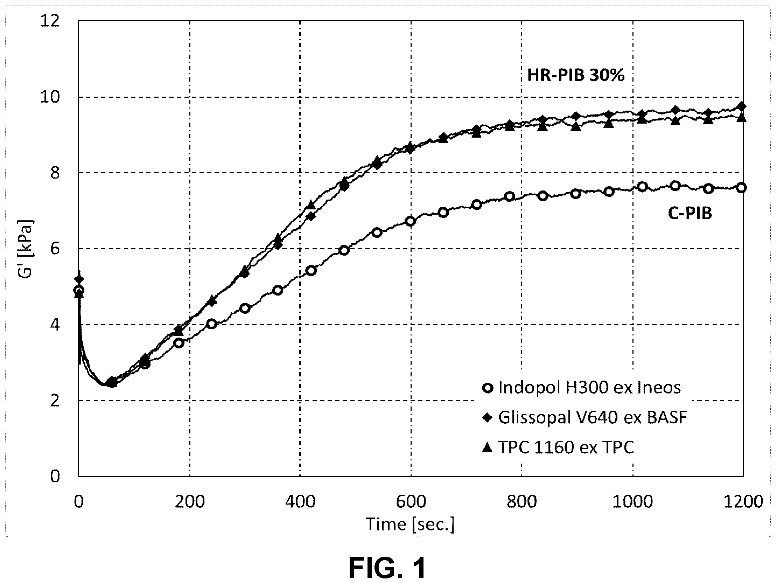

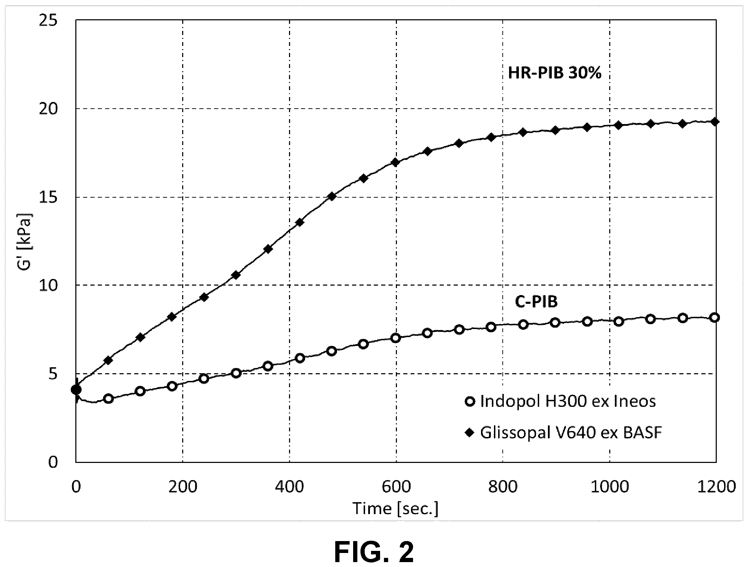

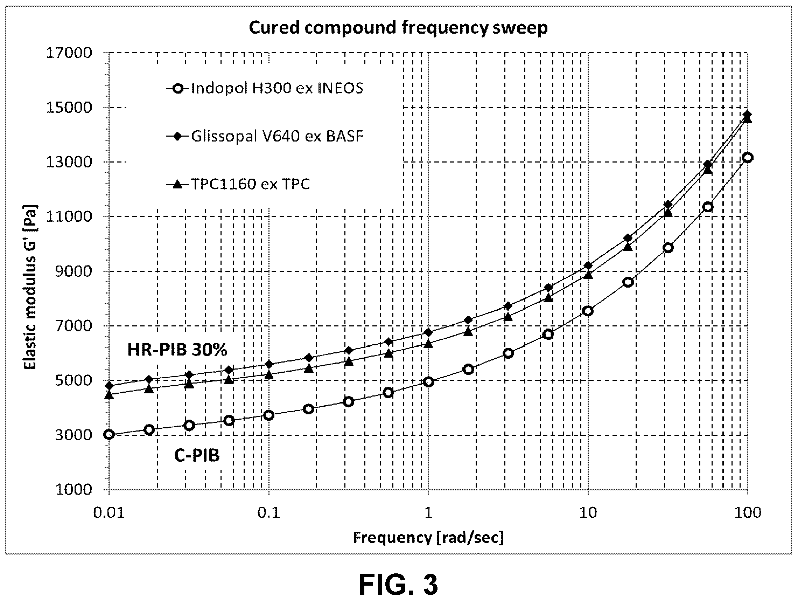

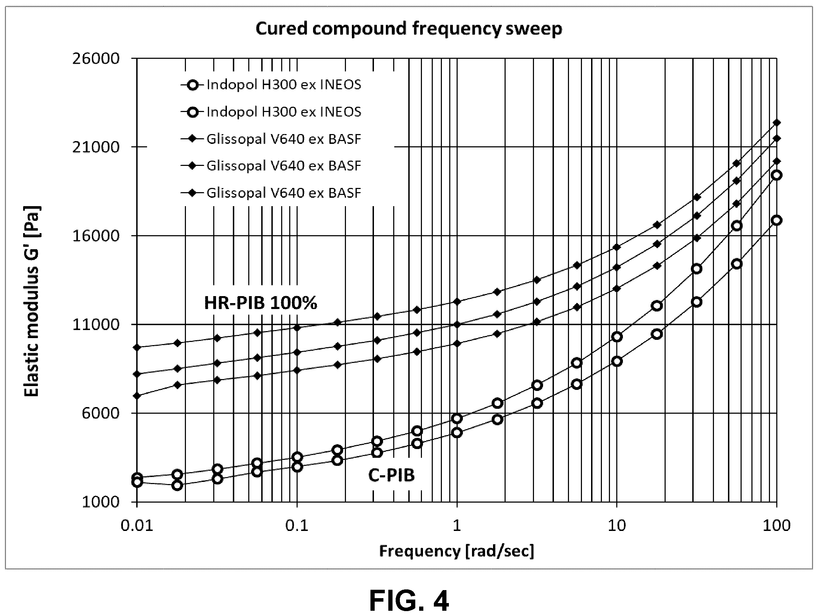

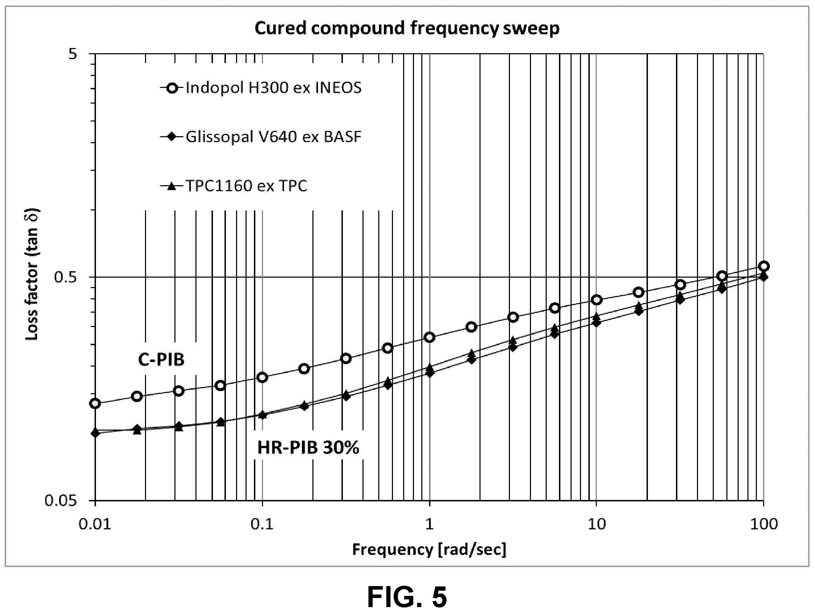

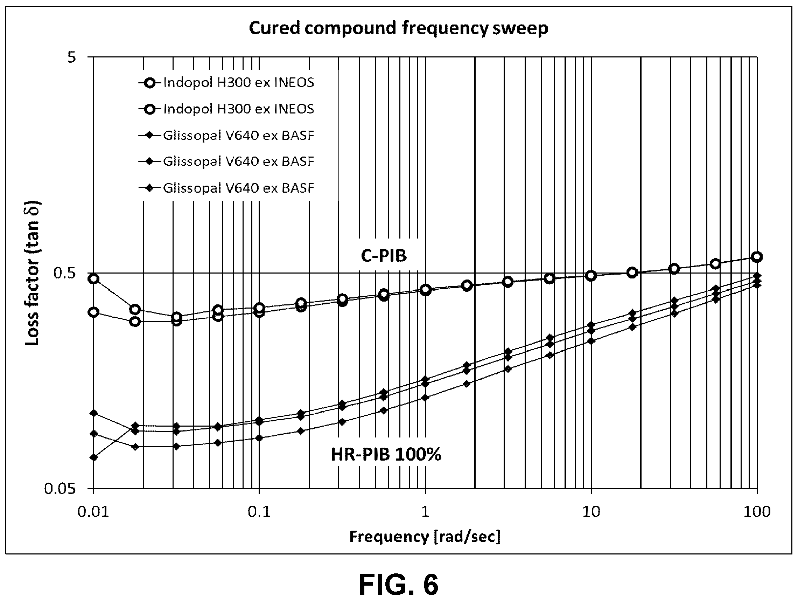

The rheological properties of cured rubber compositions described herein were evaluated. The test methods for evaluating the cured compositions is provided in Table 1. The test results are provided in Table 2 and FIGS. 1-6.

**Table 1**

| ASTM | | D 5289 (RPA) | D 4440 (Rheology) |
|---|---|---|---|
| Equipment | | D-RPA 3000 Company Montec | MCR 102 Company Anton Paar |
| Sample | | Uncured composition for use as sealant | Cured composition for use as sealant |
| Geometry | | Biconical die | Plate-plate |
| Amount | | 5 g | 1 mm gauge |
| Protocol | | Isotherm, at constant strain and frequency | Isothermal, frequency sweep at constant strain |
| Set parameter | strain | 6.1 % | 0.5% |
| | frequency | 1.672 Hz | 0.001 Hz to 10 Hz |
| | temperature | 70°C | 60°C |
| | time | 20 min | |

**Table 2**

| | | Reference 100% C-PIB (Indopol H300) | 30% HR-PIB (TPC 1160) 70% C-PIB (Indopol H300) | 30% HR-PIB (TPC 1160) 70% C-PIB (Indopol H300) | 100% HR-PIB (Glissopal V640) |
|---|---|---|---|---|---|
| RPA | G' [kPa] after 20 min @ 70°C | 7.61 | 9.46 | 9.7 | 19.29 |
| | Increase | | 24.% | 27.5% | 153.5% |
| Rheology | G' [Pa] @0.005 Hz, 0.5% strain and 60°C | 3357 | 4869 | 5201 | 8824 |
| | Increase | | 45.0% | 54.9% | 162.9% |
| Rheology | Tan delta @ 0.005 Hz 0.5% strain and 60 °C | 0.155 | 0.107 | 0.108 | 0.078 |
| | Reduction | | -31.0% | -30.3% | -49.7% |

As shown in the data above, the rubber compositions prepared from diluents composed of 100% the first, highly reactive polyisobutene (HR-PIB) or mixtures of the first, highly reactive polyisobutene (HR-PIB) and conventional polyisobutene (C-PIB) had a significantly higher elastic modulus G' when compared to cured rubber compositions not prepared with HR-PIB. Additionally, the rubber compositions prepared from diluents composed of 100% highly reactive polyisobutene (HR-PIB) or mixtures of highly reactive polyisobutene (HR-PIB) and conventional polyisobutene (C-PIB) also had a significantly reduced loss factor tan delta when compared to cured rubber compositions not prepared with HR-PIB.

## Claims

1. An uncured composition comprising: an elastomer, a curing agent, a co-curative, and a diluent, wherein the diluent comprises or consists of a first polyisobutene that comprises at least 60 mol% of terminal vinylidene groups.

2. The composition of claim 1, wherein the diluent comprises a second diluent comprising a second polyisobutene comprising at most 20 mol% terminal vinylidene groups, a hydrocarbon oil, or a combination thereof.

3. The composition of claim 2, wherein the weight ratio of the first polyisobutene to the second diluent is 1:20 to 20:1, preferably 1:20 to 1:2.

4. The composition of at least one of the previous claims, wherein the second diluent comprises a second polyisobutene comprising at most 10 mol% of terminal vinylidene groups, or wherein the second diluent comprises a second polyisobutene comprising from 5 mol% to at most 20 mol% of terminal vinylidene groups.

5. The composition of at least one of the previous claims, wherein the second polyisobutene has a number average molecular weight of 500 Dalton to 5000 Dalton; and/or wherein the first polyisobutene has a number average molecular weight of 500 Dalton to 5000 Dalton.

6. The composition of at least one of the previous claims, wherein the second diluent comprises a hydrocarbon oil.

7. The composition of claim 6, wherein the hydrocarbon oil comprises a mineral oil, a vegetable oil, or a combination thereof.

8. The composition of at least one of the previous claims, wherein the first polyisobutene comprises from 60 mol% to less than 95 mol% terminal vinylidene groups.

9. The composition of at least one of the previous claims, wherein the elastomer comprises repeat units formed by residues of monomers selected from one or more of ethylene, propylene, isobutene, butadiene, isoprene, styrene, acrylonitrile, and any combination thereof.

10. The composition of at least one of the previous claims, wherein the curing agent is a quinoid selected from the group consisting of benzoquinone dioxime, p,p-dibenzoylquinone dioxime, dibenzoyl-p-quinone dioxime, p-dinitrosobenzene, N-methyl-N, 4-dinitrosoanilene, and any combination thereof.

11. The composition of at least one of the previous claims, wherein the co-curative is an organic peroxide selected from the group consisting of a diaroyl peroxide, a diacyl peroxide, and a peroxyester.

12. The composition of at least one of the previous claims, wherein the diluent is from 50 weight percent to 80 weight percent of the composition.

13. A vulcanized composition comprising the uncured composition of at least one of the previous claims that has been vulcanized.

14. The vulcanized composition of claim 13, wherein:
(i) the composition after cure has an elastic modulus G' at a strain of 6.1%, 70°C, and a frequency of 1.672 Hz based on ASTM D5289 that is at least 20% greater than the elastic modulus G' of a cured composition that does not comprise said first polyisobutene; or
(ii) the composition after cure has an elastic modulus G' at a strain of 0.5%, 60°C, and a frequency of 0.005 Hz based on ASTM D4440 that is at least 30% lower than the loss factor tan delta of a cured composition that does not comprise said first polyisobutene; or
(iii) the composition after cure has a loss factor tan delta at a strain of 0.5%, 60°C, and a frequency of 0.005 Hz based on ASTM D4440 that is at least 30% lower than the loss factor tan delta of a cured composition that does not comprise said first polyisobutene.

15. An article such as a tire or a component of a tire comprising the vulcanized rubber composition of claim 13 or 14.
